# EUROPEAN PATENT APPLICATION

(11) **EP 2 343 449 A2**
(43) Date of publication of application: **13.07.2011**
(21) Application number: 11150765.3
(22) Date of filing: 12.01.2011
(51) Int. Cl.: F03D 1/06

(54) **Blade for a horizontal axis wind turbine**

(30) Priority: 12.01.2010 IT BA20100002 U
(71) Applicant: Sivilli, Domenico, 70027 Bari (IT)
(72) Inventor: Sivilli, Domenico, 70027 Bari (IT)
(74) Representative: Reniero, Cirillo Silvano

(57) **Abstract**

The present invention relates to a blade for a multiple horizontal axis wind turbine, the blade having a body (2) with two substantially flat faces (2a, 2b), and a blade-carrying bar (3) suitable for engaging one face (2b) of the blade and overhangingly supporting the blade, the blade comprising at least one listel element (4) secured to the other face (2a) of the blade and designed to vary the aerodynamic resistance of the blade.

## Description

The present invention relates to a blade for a multiple horizontal axis wind turbine, as well as to a multiple wind turbine obtained with it.

As it is well known, for the exploitation of the wind energy turbines are used which in the so-called "Mini Wind" sector, i. e. designed to produce relatively small amounts of electric energy, have a diameter larger than half a meter and a height lower than 30 m.

Given the small size of the blades, it is possible to install a plurality of wind generators even in a relative small space, and thus it is possible to obtain plants suitable for producing altogether up to 200 kW of electric energy.

Mini wind systems are normally used in agricultural, artisan areas or for plants for isolated users (the so-called stand-alone or off-grid systems). They are, in general, medium power plants serving small communities, typically adopted for stand-alone settlements on the mountains or on an island, or small plants connected to low voltage grids for supplementary home supply. The adoption of mini and micro generators for these kinds of installation has again become economically advantageous, on the one side, owing to the increase of the cost of energy from oil, and the introduction of new low cost technologies, on the other.

The mini wind generators are very simple to produce and upkeep and are structured according to suitable technical features that make it possible also to use non stop mini turbines for many consecutive years without the need of substantial maintenance interventions.

The mini wind systems, especially in so far as the isolated users are concerned, can be used in combination with photovoltaic plants and/or diesel generators, in order to ensure full energy self-sufficiency to the users.

The mini wind generators are usually installed on towers about 30 m high. The power of such generators ranges from a few hundreds Watt to 100 kW and can adopt both horizontal and vertical axis turbines.

Turbine generators are increasingly used in urban areas, and this also due to their modest environmental impact.

Wind mills made to measure have also been developed for residential neighborhoods or small enterprises, e. g. in the field of utilities, tourism, agritourism, camping, holiday villages and hotels, wellbeing centers or even in small and medium enterprises in the agricultural sector, such as wine growing and olive growing farms or enterprises of transformation of agricultural products.

Horizontal axis turbines can be oriented through a fin located downstream of the blades, so that the latter have permanently a trim substantially perpendicular to the wind. Vertical axis turbines, instead, do not need to be subjected to trim changes in use and are reduced in size, pleasant from the aesthetical point of view and more suitable for urban kinds of wind which are usually turbulent (with variable intensity and direction) and thus little suitable for horizontal axis turbines.

Conventional horizontal axis wind generators generally comprise a rotor, a nacelle that supports the rotor, and a tower, on which the nacelle is adjustably mounted. More particularly, a substantially vertical support tower can be provided which is secured to the ground, is, e. g., lower than 24 m, and supports at the top thereof with the interposition of suitable bearings a nacelle, which is adjustable around a vertical axis depending to the wind direction and locates an electric current generator therein. The current generator, in turn, receives the motion from one end of a transmission shaft, which at its other end is connected to a rotor comprising a hub on which the blades of a turbine are mounted. The rotor is normally positioned upwind, whereas the nacelle is also advantageously provided with a yaw control system, such as that disclosed in the utility model application BA2010U000003 in the name of the applicant of the present patent application.

With a structure of this type it is possible to obtain powers ranging from 1 to 90 kW/h.

In windmills, when the wind speed is higher than a given limit, termed cut-in speed, the rotor starts to rotate owing to the force applied to the blades by the wind. The mechanical energy applied to the transmission shaft by the rotor can be directly used, e. g. for energizing motors, hydraulic pumps and the like (in this case we are dealing with motors or pumps operated by wind), or converted into electric energy through an electric generator, usually comprising an alternator (in this case we are dealing with generators operated by wind).

With the turbines proposed up to now, if the wind has a speed lower than 2-3 m/s, no energy can be generated as at such speeds a force sufficient to cause the rotor to rotate, and thus to generate mechanical energy to be transmitted to the transmission shaft, cannot be developed.

The main object of the present invention is provide a blade for a multiple horizontal axis wind turbine whish is suitable for producing electric energy even at very low wind speeds.

Another object of the present invention is to provide a blade which is very simple and economic to produce.

Another object of the present invention is to provide an aerodynamic blade suitable for producing a low acoustic environmental impact.

Another object of the present invention is to provide a turbine with blades according to the present invention, which is very efficient even in moderate wind force conditions.

Another object of the present invention is to provide a turbine which is assemblable in a simple and rapid way.

According to a first aspect of the present invention there is provided a blade for a multiple horizontal axis wind turbine, the blade having a body with two substantially flat faces, and a blade carrying bar suitable for engaging one face of the blade and overhangingly supporting the blade, the blade comprising at least one listel element secured to the other face of the blade and designed to vary the aerodynamic resistance of the blade.

According to another aspect of the present invention a multiple horizontal axis wind turbine is provided comprising at least one radially extending blade as specified above, the lying plane of each radial blade being inclined with respect to the axis of rotation of the turbine.

Further aspects and advantages of the present invention will better appear from the following detailed description of specific embodiments of a blade for a multiple horizontal axis wind turbine, as well as of a multiple turbine provided with a plurality of such blades, the description being made with reference to the accompanying drawings, in which:

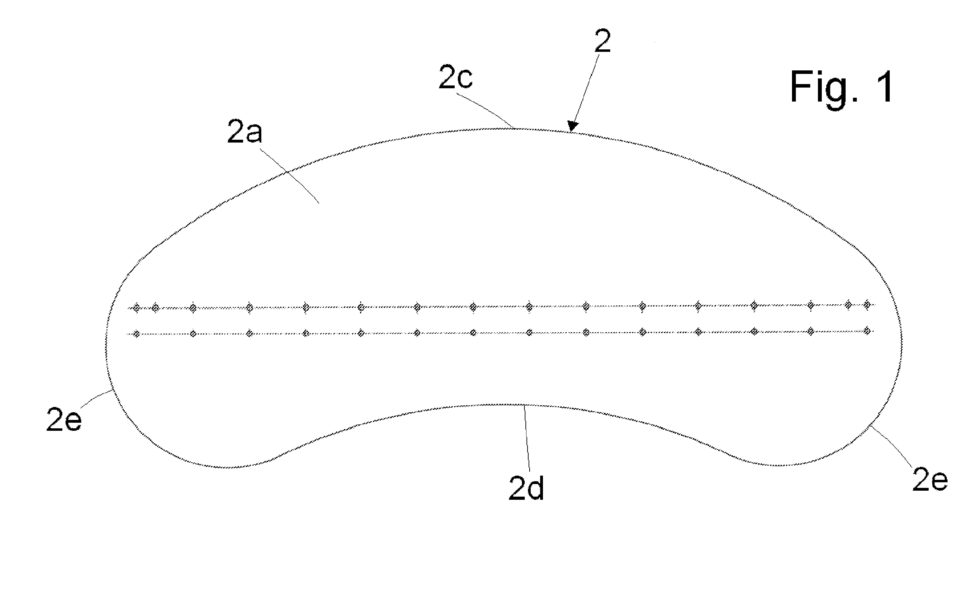

- Figure 1 is a front view of a flat blade according to the present invention;

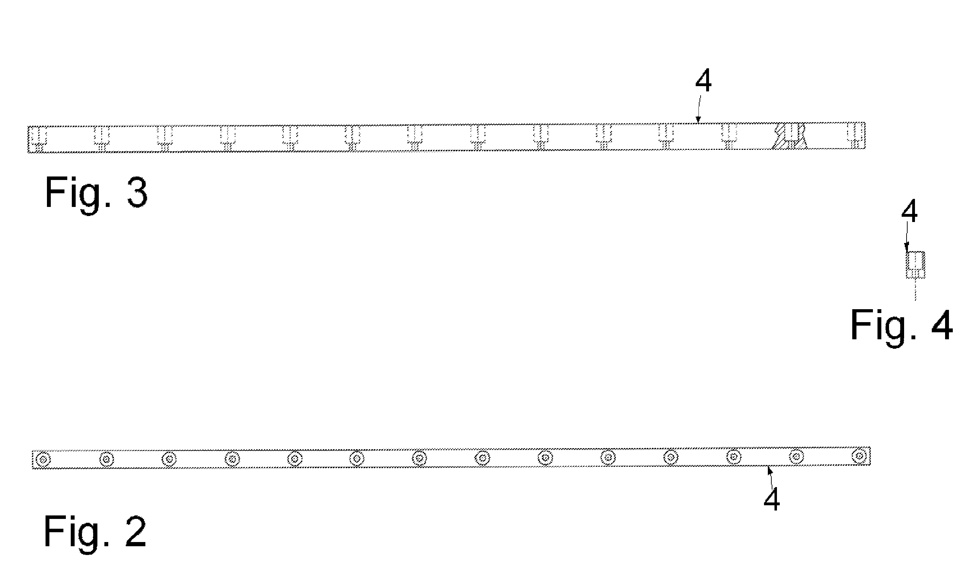

- Figures 2 to 4 are top, side and front view, respectively, of a list element of a blade according to the present invention;

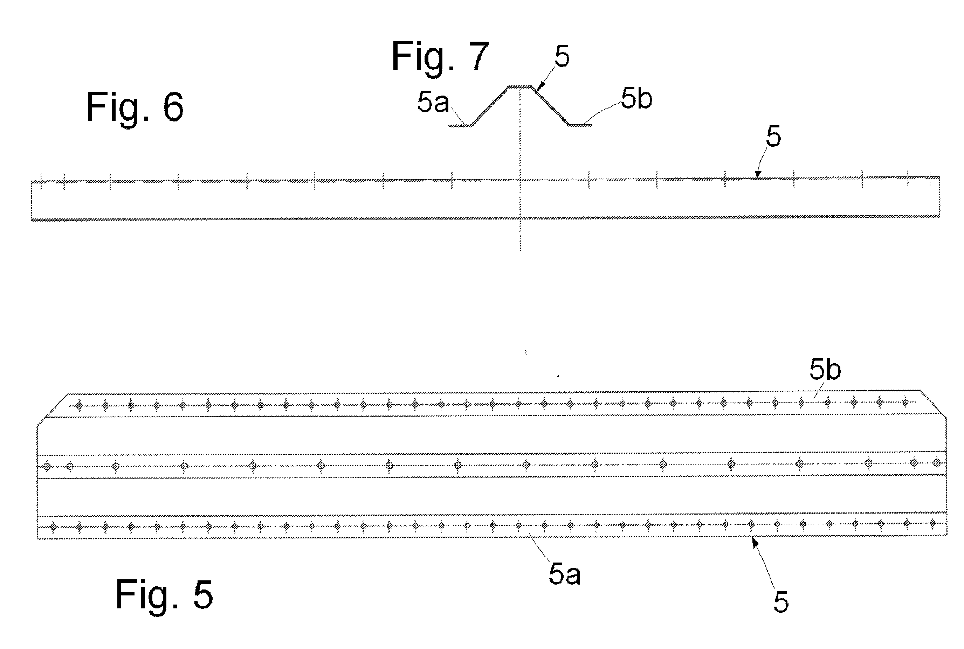

- Figures 5 to 7 are top, side and front view, respectively, of a securing plate for securing a blade according to the present invention to a respective blade-carrying bar;

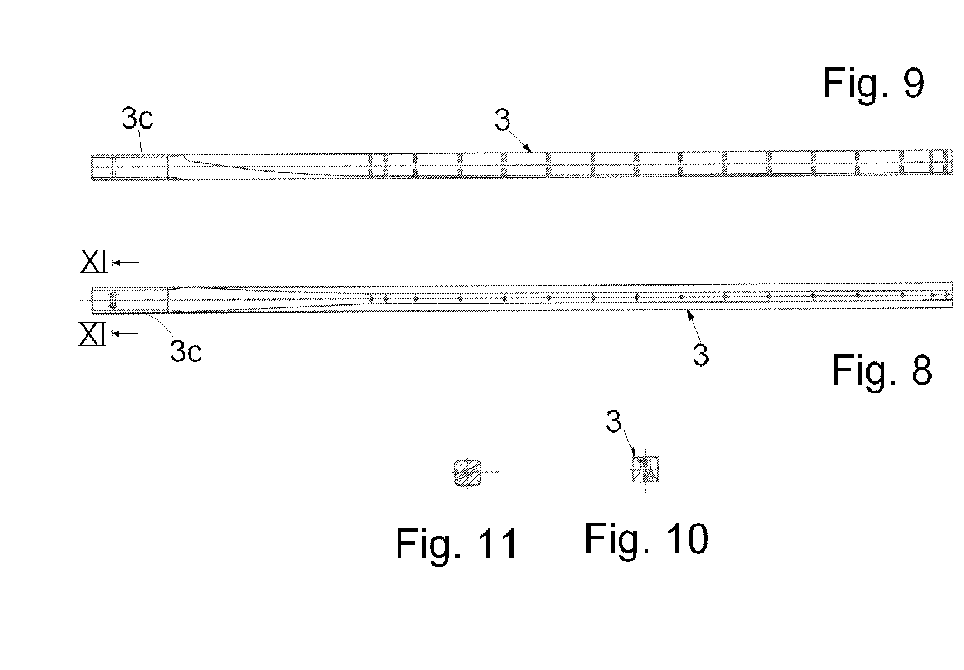

- Figures 8 to 10 are top, side and front view, respectively, of a blade-carrying bar for a b lade according to the present invention;
- Figure 11 is a cross-section view taken along the line XI-XI of Fig. 8;
- Figures 12 and 13 are top and side views, respectively, of a blade according to the present invention secured to a blade-carrying bar;
- Figures 14, 15 and 16 are top, side and from below views, respectively, of a rotor disc of the hub of a turbine according to the present invention;
- Figures 17 e 18 are top and side views of a closing template element of a blade-carrying bar to a rotor disc of a turbine according to the present invention;
- Figures 19 is a side view of rotor disc having a closing template element of Fig. 17 assembled thereon;
- Figure 20 is a front view of an assembly comprising a rotor disc carrying a plurality of blade-carrying bars and a respective blade; and

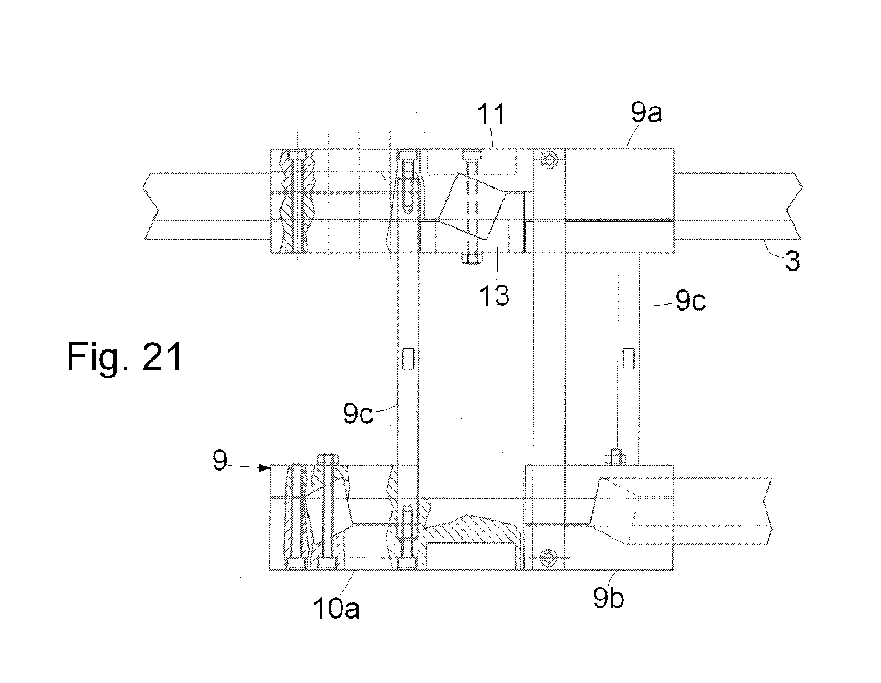

- Figure 21 is a side view with parts in cross section of the hub of the turbine rotor with a number of blade-carrying bars secured thereto.

In the accompanying drawings, the same or similar parts or components have been indicated with the same reference numerals.

With reference to the above listed Figures, it will be noted that a blade 1 for a multiple horizontal axis wind turbine according to the present invention comprises a substantially flat body 2 having two main faces 2a and 2b surrounded by a first longitudinal convex curved edge 2c at which the blade hits the wind, and a second longitudinal concave curved or recessed outlet edge 2d. The edges 2c and 2d are arranged opposite to one another and radiused at their ends with two cross convex curved edges 2e.

The blade 1 is designed to be overhangingly supported at one face 2b of a respective blade-carrying bar 3. To this end, an oblong securing plate 5 is provided which is U-shaped in cross-section, so as to delimit, in use, a receiving seat for the blade-carrying bar 3 together with the face 2b of the blade. The securing plate 5 preferably has flanged longitudinal edges 5a, 5b for a securing action, e. g. through bolts 5c, rivets or the like, to the face 2b of the blade 1. Fixing bolts 3a, 3b are also provided between blade 1 and bar 3 and between bar 3 and plate 5.

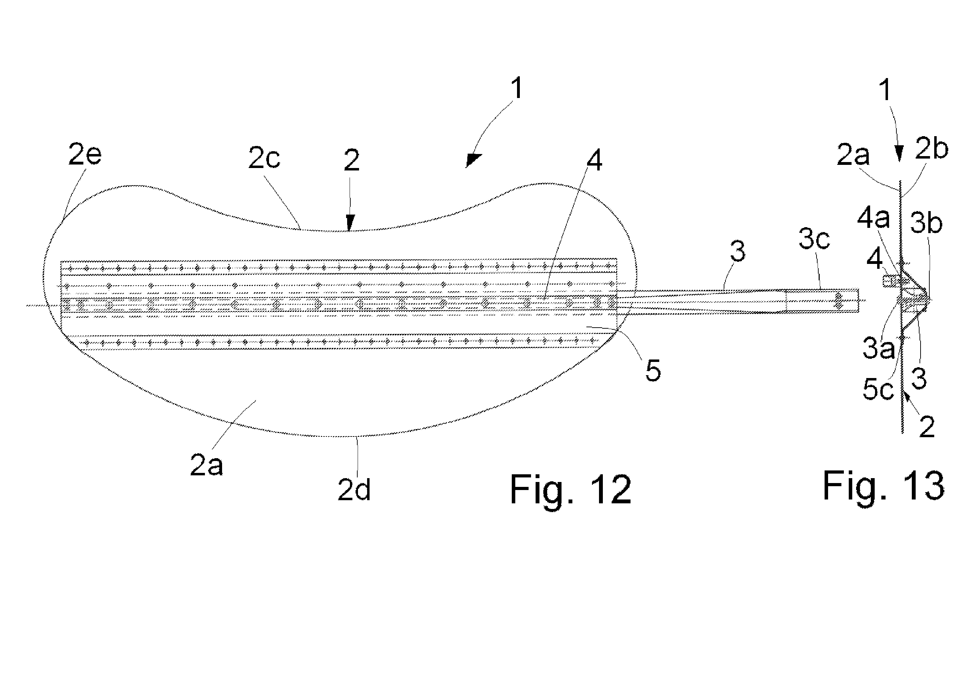

Blade 1 further comprises at least one listel element 4 secured, e. g. by means of rivets or bolts 4a (Fig. 13), to the other face 2a, and extending substantially aligned or slightly angled with respect to the bar 3. The listel 4, in use, raises, preferably with side walls at 90°, from its respective face 2a of the blade 1. Preferably, the listel element 4 is substantially straight and arranged substantially parallel to the tangent to the median point or point of maximum concavity of the edge 2c and of maximum concavity of the edge 2d.

The listel element 4 is designed, as better explained hereinbelow, to oppose the wind to vary the aerodynamic resistance of its respective blade 1.

A multiple horizontal axis wind turbine 6 according to the present invention comprises a plurality of radial blades 1 preferably uniformly angularly spaced from one another and overhangingly supported by a substantially horizontal axis rotor 7, the blades 1 being anchored to the rotor 7 through their respective blade-carrying bar or arm 3.

The lying plane of each blade 1 is inclined with respect to the axis of rotation of the turbine, so that the blades lay in a respective plane which is not orthogonal to the rotor axis.

According to the embodiment illustrated in the drawings, the rotor 7 comprises a hub 9 including a pair of disc elements: frontal one 9a, in use, and a rear one 9b, which are connected and kept spaced apart and axially aligned by a plurality of peripheral spacers 9c, which protrude in an axial direction and are securable in position (e. g. through bolts) in radial bores 9d formed along the edge of each disc element 9a and 9b, the bores 9d being angularly spaced from one another, so that the two disc elements 9a, 9b together with the spacers 9c delimit a cage hub structure 9 designed to be mounted on, and secured to in any convenient way (typically through a key), a transmission shaft (driving shaft), not shown in the drawings. To this end, each disc element 9a, 9b is formed with a central through bore or opening H, through which the transmission shaft can be inserted, whose longitudinal axis is the axis of rotation of the turbine.

Each disc element 9a, 9b has a flat face 10a and an opposite face 10b, in use, designed to be facing the other disc element and having angularly spaced radial relieves, in the illustrated embodiments four relieves 11 angularly spaced substantially through 90° in each of which a receiving radial seat 11 a is formed. To each radial relief 11 a respective closing template element 13 is designed to clamp in position the tang 3c of a respective blade-carrying bas 3. Each closing template element 13 can be removably secured in position to a respective radial relief 11 through suitable locking means, e. g. bolts 12.

Preferably, the tang 3c of the blade-carrying bars 3 is polygonal, e. g. square, in cross-section. The receiving seats 11a are shaped so as to have a light substantially corresponding to the (square) cross section of the blade-carrying bar 3, although with side walls angularly offset with respect to the axis of rotation of the rotor 7, i. e. inclined, typically from 4° to 10°, with respect to the lying plane of their respective disc element 9a, 9b.

With such a structure, once the tang 3c of each blade-carrying bar 3 has been locked in position in its respective receiving seat 11 a, its blade 1 which is anchored to one face of the blade-carrying bar 3 is set in a lying plane that is correspondingly inclined with respect to the axis of rotation of the turbine rotor, or better to the orthogonal plane to such axis of rotation.

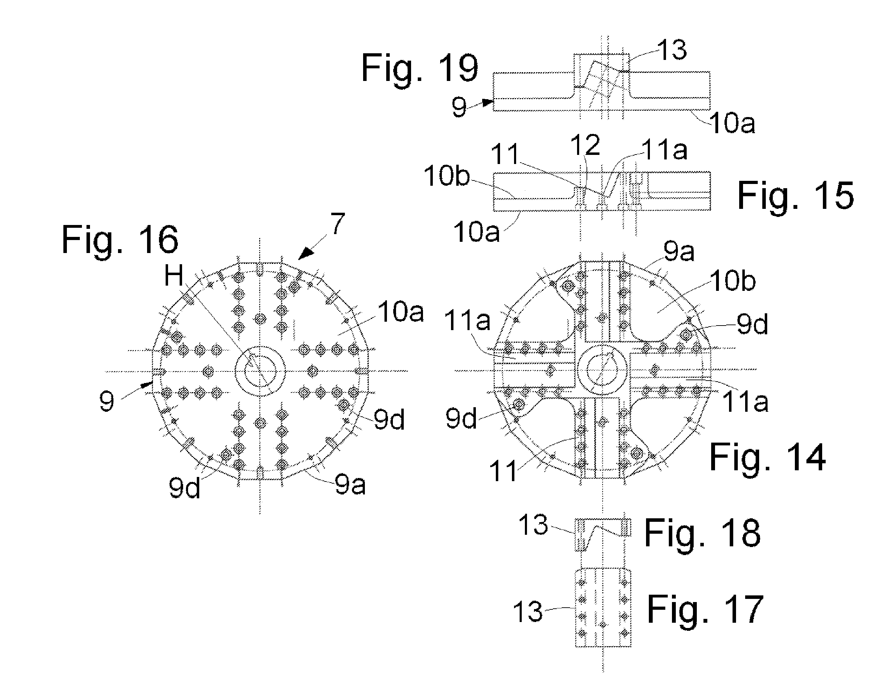

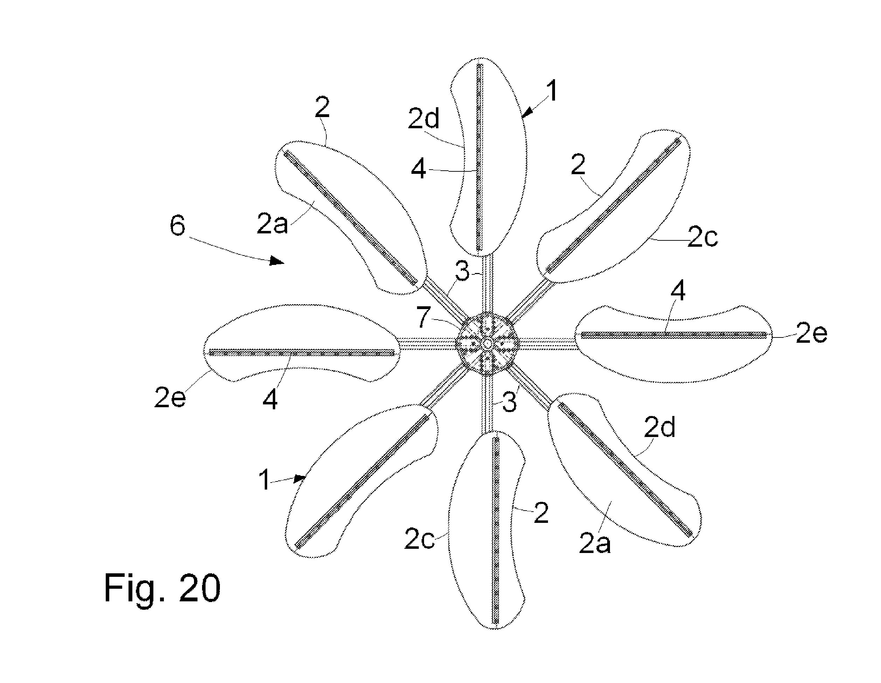

Preferably, the blade-carrying bars 3 borne by one disc element 9a are angularly offset through about 45° with respect to the plurality of blade-carrying bars 3 supported by the other disc element 9b (Figures 19 and 20), so that each blade 1 is directly hit by the wind, i. e. each blade 1 on one disc element does not fluid dynamically disturb the blades 1 on the other disc element.

The above described turbine can be a component of an electric energy generating device, in which case the driving or transmission shaft is operatively connected to an alternator or to a dynamo, typically arranged in a nacelle mounted for rotation about a vertical axis on a support tower and provided with adjusting means for adjusting the orientation or yaw with respect to the wind direction.

Owing to the presence of the listel element 4 secured to each blade 1 according to the present invention, its respective multiple turbine can be set in operation (and thus start rotating) even when the wind has a speed of merely 1 m/s in any orientation (windward or not) of the turbine, whereas with a turbine provided with conventional blades this can only happen at wind speeds not lower than 2-3 m/s.

As a matter of fact, the listel element 4 imparts an auxiliary thrust to its respective blade 1, and thus to the turbine, at low speeds, thereby ensuring a quick start as the wind speed increases.

It will be easily understood, in fact, that the listel element 4 is an obstacle which increases the hit surface for a low speed wind, and thus it makes it possible to cause by reaction the rotation of the turbine also at low wind speeds.

The configuration of the blades according to the present invention is also aerodynamic so as to ensure a reduced impact noise by the wind with respect to the blades known up to now, since peripheral speeds at the ends of the blades are reached which are lower than the sound velocity, with consequent low noise at high frequencies.

The blades according to the present invention are made of diamagnetic materials, with good mechanical characteristics, optimum weatherability.

The above described blade and turbine are susceptible to numerous modifications and variations within the scope of protection defined by the claims.

## Claims

1. A blade for a multiple horizontal axis wind turbine, the blade having a body (2) with two substantially flat faces (2a, 2b), and a blade-carrying bar (3) suitable for engaging one face (2b) of the blade and overhangingly supporting the blade, **characterized in that** the blade comprises at least one listel element (4) secured to the other face (2a) of the blade and designed to vary the aerodynamic resistance of the blade.

2. A blade as claimed in claim 1, **characterized in that** said body has a first curved inlet or wind hit edge (2c) and a second curved outlet edge (2d).

3. A blade as claimed in claim 1 or 2, **characterized in that** said listel element (4) extends substantially aligned or slightly angled with respect to said bar (3).

4. A blade as claimed in any previous claim, **characterized in that** said listel element (4) is arranged substantially parallel to the tangent to the median point of said inlet (2c) and outlet (2d) edges.

5. A blade as claimed in any preceding claim, **characterized in that** it comprises at least a securing plate (5) for being secured to said bar (3), said plate (5) being U-shaped, thereby delimiting with said blade (1) a receiving seat (3) for said bar (3).

6. A multiple horizontal axis wind turbine, **characterized in that** it comprises a plurality of blades (1) as claimed in any preceding claim.

7. A turbine as claimed in claim 6, **characterized in that** the laying plane of each of said blades (1) is inclined with respect to the axis of rotation of the turbine, whereby the blades lay in a respective plane which is not orthogonal to the axis of rotation of said turbine.

8. A turbine as claimed in claim 6 or 7, **characterized in that** it comprises at least one rotor (7), said blades (1) being radially connected to a hub (9) of a rotor and angularly spaced from one another.

9. A turbine as claimed in claim 8, **characterized in that** said rotor (7) comprises a pair of disc elements (9a, 9b) axially aligned to each other and spaced by a plurality of spacers (9c), a central through bore or opening (H) being formed in each disc element (9a, 9b) for being mounted on a transmission shaft.

10. A turbine as claimed in claim 9, **characterized in that** each disc element (9a, 9b) has a flat face (10a) and its opposite face (10b) has a plurality of radial angularly spaced relieves (11) in each of which a radial receiving seat (11 a) is formed, and for each radial relief (11) it comprises a securing template element (13) designed to secure in position the tag (3c) of a respective blade-carrying bar (3).

11. A turbine as claimed in claim 10, **characterized in that** the tag (3c) of said blade-carrying bars (3) is polygonal in cross-section, and said receiving seats (11a) are so shaped as to have a light substantially corresponding to the cross-section of the respective blade-carrying bars (3), but with angularly offset side walls with respect to the axis of rotation of the rotor (7).

12. A turbine as claimed in any claim 9 to 11, **characterized in that** the blade-carrying bars (3) anchored to one disc element (9a) are angularly offset with respect to the blade-carrying bars (3) secured to the other disc element (9b).

13. An energy generator device **characterized in that** it comprises at least one turbine as claimed in any claim 6 to 12.
